# EUROPEAN PATENT APPLICATION

(11) **EP 1 262 499 A1**
(43) Date of publication of application: **04.12.2002**
(21) Application number: 02011507.7
(22) Date of filing: 22.05.2002
(51) Int. Cl.: C08G 18/10, C08G 18/48, C08K 3/22, D01F 1/10, D01F 6/70

(54) **Composition of an elastic fiber which can resist water containing chlorine**

(30) Priority: 30.05.2001 IT MI20011144
(71) Applicant: FILLATTICE S.p.A., 24042 Capriate San Gervasio (Bergamo) (IT)
(72) Inventor: The designation of the inventor has not yet been filed
(74) Representative: Cioni, Carlo

(57) **Abstract**

Compound containing polyurethane and hydrotalcite to give elastic thread resistance to the action of the chlorine by means of dry or fused spinning, or spinning from solution in which the average grain size of the hydrotalcite added to the polyurethane is less than 1 micron and preferably less than 0.8 micron.

## Description

The present invention relates to a compound which is useful in the preparation of elastic fibers which resist the action of solutions containing chlorine. In particular, the present invention relates to polyurethane or polyamide elastic fibers containing hydrotalcite which resist the action of chlorine dissolved in water.

The elasticated fabrics used for the preparation of elastic stockings, swimsuits and articles of sportswear, are obtained by starting from segmented long-chain polyurethane elastic fibers, normally in a mix with with other fibers. The production processes for elastic polyurethane fiber have been well known for a long time and essentially they provide for the formation of a pre-polymer, made by reacting a polyol with di-isocyanate, having two --NCO radicals as terminal groups. The pre-polymer thus obtained reacts with a compound containing active hydrogen (extender) in order to form the polymer. The reaction that gives rise to the pre-polymer and the successive extension of the chain in order to obtain the polymer is conducted in the presence of a solvent that is removed in the spinning phase by means of evaporation (dry spinning) or coagulation (wet spinning). The solvents normally used are dimethylacetamide and dimethylformamide.

The fibers obtained by this process have high elasticity, optimal mechanical characteristics and good resistance to heat treatment. For this reason they confer high added value to the fabrics produced when used in mixes with other fibers. As stated above, the fields of application are: classical clothes, swimsuits, underwear and hosiery.

However, it is also well known that when swimsuits produced with polyurethane and polyamide elastic fibers come into contact with water containing chlorine and, in particular, with swimming-pool water containing from 0.5 to 3 ppm of chlorine, there is a degradation of the mechanical characteristics of the polyurethane elastic fibers.

Several solutions have been proposed and used to improve the resistance of polyurethane fibers to chlorine. The improvements suggested to overcome the above-mentioned disadvantages consist in enveloping the polymer -- before spinning -- in a compound that prevents the chlorine from attaching to the thread while maintaining the good mechanical characteristics of the thread.

The Japanese patent application no. JP-57-29609 claims that zinc oxide gives the thread optimum resistance to aqueous clorine, but has the serious disadvantage that a good part of the zinc oxide is removed during washing and dying processes; the amount then remaining on the fiber is no longer confers adequate chlorine resistance on the fabric.

In order to overcome this disadvantage, the Japanese patent application no. JP-59-132248 proposes a polyurethane polymer composition in which chlorine resistance is improved by the addition of hydrotalcite to the polymer. The amount of product that is removed during the washing and dying processes is clearly less than in the case of zinc oxide, even in acid pH conditions (pH 3-4) and, therefore, fiber produced under these conditions has excellent resistance to water containing chlorine.

On the other hand, in patent n. EP-B-558758 of the same applicant, it is asserted that the hydrotalcite tends to agglomerate easily in the presence of polar solvents such as dimethylformamide or dimetilacetammide, which are used in the spinning of the polyurethane polymers. This phenomenon causes the occlusion of the thread and breakage of the warp thread during the spinning process. Moreover, the presence of the hydrotalcite agglomerate causes further problems, such as brown coloration of the thread in the presence of tannin (used to increase the solidity of colorants) and swelling of the thread when it is dipped in water containing chlorine.

In same patent n. EP-B-558758 it is asserted, that in order to overcome all these drawbacks linked to the use of hydrotalcite, it is necessary to use a formulation in which the hydrotalcite is in the hydrated form containing water of crystallization and is, moreover, covered by a fatty acid having from 10 to 30 carbon atoms in the chain. According to what is reported in the above-mentioned patent, using hydrotalcite in the form indicated, the stated disadvantages are not found and, in particular, increased tension with consequent breakage is not found in the thread during spinning; the thread does not undergo discoloration phenomena during the dying phase due to the presence of tannin, and does not swell when it is dipped in water containing chlorine. However, the increase of material other than polyurethane in the elastic fiber renders the preparation of the same fiber more complex and expensive.

### AIM OF THE INVENTION

The aim of the present invention is to provide an elastic thread that is resistant to the action of chlorine and that does not present the disadvantages complained of above, together with a method that is simple and economical for the preparation of this thread.

The applicant has found surprisingly that the addition of hydrotalcite in the polymer-preparation phase, or, at any time prior to spinning, gives a thread with good anti-chlorine characteristics which does not require any treatment of the hydrotalcite with fatty acid as envisaged in patent no. EP-B-58758 if the average grain size of the hydrotalcite used is less than 1 micron and, preferably, less than 0.8 micron.

The hydrotalcite with this grain size can easily be obtained by milling commercial hydrotalcite with conventional ball mills.

In particular, good results have been obtained by milling hydrotalcite with micro-sphere mills

The milling of hydrotalcite used according to the invention can be either dry or with the hydrotalcite dispersed in a solvent that can be removed by evaporation.

Preferably, the solvent in which the hydrotalcite is dispersed should be the same as that used for the polymerization process.

Operating according to the present invention it is not necessary that the hydrotalcite used contain water of crystallization. On the contrary, it was observed that the best results are obtained with anhydrous hydrotalcite.

Two mills in series can also be favorably used to mill the hydrotalcite in order to obtain the grain size according to the invention. The two mills in series may be of the same type or different.

It was also observed that better results are obtained when the particle-size distribution curve of the hydrotalcite used is narrow and grouped around the average value, i.e. the greater part (more than 80%) of particles have dimensions near the average value, preferably within ± 10% of the average value.

Any type of hydrotalcite can be used within the ambit of the present invention. Good results have been obtained with hydrotalcite having the following general empirical formula:

MgxAl2(OH)2x+6-2(z+y)(CO3)yOz.nH2O

where x ranges from 3.5 to 6; y ranges from 0.5 to 2 and z ranges from 0.1 to 1; n is either 0 or a positive integer.

In particular the best results have been obtained with hydrotalcite of formula:

Mg4,5Al2(OH)13(CO3)0,8O0,2.

On the other hand, the preparation of the hydrotalcite is very well known to experts in the art.

The hydrotalcite used in the preparation procedure of elastic thread can be mixed with other additives commonly employed in the industrial production of elastic thread such as anti-oxidant agents, or stabilizing agents against the action of light and U.V. radiations etc.

As pointed out above, the method of preparation of the hydrotalcite used according to the invention is not a critical factor in the attainment of the desired result. In effect, optimum results have been obtained with various types of hydrotalcite It is also possible to use the mixture of oxides that comprise hydrotalcite as anti-chlorine agent.

The small-grain hydrotalcite used according to the invention is retained inside of the fiber in a stable manner. Tests conducted for this purpose on fabric subjected to washing treatments have shown that, after initial loss of hydrotalcite, the concentration stabilized at more than 90% of the original hydrotalcite content.

A further more pertinent positive aspect of the invention compared to the known technique is the fact that the number and quantity of extraneous materials is reduced.

The present invention will now be best illustrated with the aid of the following examples which describe some embodiments of the present invention which should not be interpreted as limiting the scope of the same.

Before passing on to a description of the examples, some methods for the appraisal and the interpretation of the experimental result are reported. In order to obtain the grain size envisaged the following apparatus was used:
1 Ultra Turrax;
2 stone mill;
3 high-speed cog mill;
4 dispersion followed by milling.

A method that simulated the spinning process was set up in order to evaluate the results obtained with the various systems reported. In particular, the polymer additive with the various products was made to pass through a spinner (the same as that used in the industrial system) by means of a pump and the increase in pressure over time was monitored.

The system that gave the best results was that providing for dispersion of the hydrotalcite in solvent followed by milling in a micro-sphere mill.

In these conditions a product with grain size suited to our objectives was obtained (Table 1).

For this purpose a series of tests was carried out on the polymerization and spinning system in order to verify the points reported below.
1. increase of pressure in spinning;
2. breakages of the thread during spinning;
3. discoloration of the fabric in the presence of tannin during dying;
4. swelling of the thread when dipped in water containing chlorine.

The results with regard to the first three points were positive: the pressure on spinning was constant, the number of breakages was acceptable and in line with the standard production.

In order to evaluate the dying properties of the elastic fiber obtained with the process of the present invention it was necessary to transform the thread into fabric on which the dye tests were carried out.

A sufficient number of shuttles were produced to transfer the thread from the shuttles to the warps by means of the wefting process. The warps were worked on looms together with nylon warps to give an elastic fabric composed of from 18% to 20% approximately of elastomer and from 80 to 82% approximately of nylon. We have been able to verify that hydrotalcite did not create problems in any of these phases (spinning, wefting or thermo fixing).

In order to estimate the behavior during the dying phase, the fabric obtained was dyed with various classes of colorants:
Acids;
. Dispersed;
. Pre-metallized.

The dying was carried out with and without tannin.

The result confirmed that, also in this case, the fabrics did not have discoloration problems with any class of colorants or in any pH condition.

### Example 1

A pre-polymer was prepared by reacting 205.4 parts of PTHF (Polytetrahydrofuran) of molecular weight 1000 ca. with 74.5 parts of MDI (4-4 Diphenyl di-isocyanate methane) in a reactor under a current of nitrogen for 90 minutes at a temperature of 90°C.

The pre-polymer thus obtained, with --NCO as terminal groups, was cooled to ambient temperature and diluted with 796.7 parts of anhydrous DMF (Dimehylformamide) thus giving a pre-polymer in solution.

In a separate tank 4.646 parts of EDA (Ethylenediamine), 0.825 parts of DEA (Diethylamine) and 15.6 parts of DMF were mixed and the resulting solution was added to the pre-polymer solution under strong agitation.

A polyurethane containing 26% of dry polymer with a viscosity of 250 poise at 40°C was obtained.

Additives, such as TINUVIN 622, (amino stabilizing agent from CIBA against the effects of the light) and IRGANOX 3790, (phenol anti-oxidant also from CIBA) were added to this solution.

The two additives were added in concentration of 0.5% and 1% respectively calculated on the weight of the finished fiber.

The polymer solution was spun on a wet spinning system to give a 44 dtex thread.

The result of this and the following tests are shown in Table 1.

### Test 1A

The procedure of example 1 was repeated except that a dispersion of hydrotalcite with the formula reported below was added at a concentration of 3% with respect to the dry polymer and with a grain size of 0.55 micron D 90 (D 90 indicates that 90% of particles measure less than or equal to 0.55 micron).

Mg4,5Al2(OH)13(CO3)0,8O0,2

### Test 1B

The procedure of example 1 was repeated except that a dispersion of hydrotalcite having the same formula as example 1A, was added at a concentration of 3% with respect to the dry polymer and with a grain size of 0.3 micron D 90.

### Test C

The procedure of example 1 was repeated except that a dispersion of hydrotalcite having the same formula as example 1A, was added at a concentration of 3% with respect to the dry polymer and with a grain size of 1.03 micron D 90.

### Test 1D

The procedure of example 1 was repeated except that a dispersion of hydrotalcite having the same formula as example 1A, was added at a concentration of 3% with respect to the dry polymer and with a grain size of 2.65 micron D 90.

### Test 1E1

The procedure of example 1 was repeated except that a dispersion of hydrotalcite having the same formula as example 1A, was added at a concentration of 3% with respect to the dry polymer and with a grain size of
0.55 micron D 90.

### Test 1E2

The procedure of example 1 was repeated except that a dispersion of hydrotalcite having the same formula as example 1A, was added at a concentration of 2,25% with respect to the dry polymer and with a grain size of 0.55 micron D 90.

### Test 1E3

The procedure of example 1 was repeated except that a dispersion of hydrotalcite having the same formula as example 1A, was added at a concentration of 3,75% with respect to the dry polymer and with a grain size of 0.55 micron D 90.

### Example 2

A pre-polymer was prepared by reacting 207,1 parts of PTHF (Polytetrahydrofuran) with molecular weight 2000 ca. with 44.01 parts of MDI (4-4 Diphenyl diisocyanate methane) for 90 minutes at a temperature of 90 °C in a reactor under a current of nitrogen.

The pre-polymer thus obtained, with --NCO as terminal groups, was cooled to ambient temperature and diluted with 678.9 parts of anhydrous DMAc (Dimethylacetamide) thus giving a pre-polymer in solution.

In a separate tank 3.95 parts of EDA (Ethylenediamine), 0.318 parts of DEA (Diethylamine) and 11.5 parts of DMAc were mixed and the resulting solution was added to the pre-polymer solution under strong agitation.

A polyurethane containing 27% of dry polymer with a viscosity of 2800poise at 40°C was obtained.

Additives, such as TINUVIN 622, (amino stabilizing agent from CIBA against the effects of the light) and IRGANOX 3790, (phenol anti-oxidant also from CIBA) were added to this solution.

The two additives were added in concentration of 1% and 0.5% respectively calculated on the weight of the finished fiber.

The polymer solution was spun on a wet spinning system to give a 44 dtex thread.

### Test 2A

The procedure of example 2 was repeated except that a dispersion of hydrotalcite having the same formula as example 1A, was added at a concentration of 3% with respect to the dry polymer and with a grain size of 0.55 micron D 90.

### Example 3

A polyester polyol and/or polyether (molecular weight 1000), 1-4 Buntandiol, the reaction catalyst, the additives (Irganox 1010, TinuvinP) were placed in a reactor at a temperature of 70-90°C with a mechanical agitator (mixer) under a current of nitrogen.

MDI was then added, in molar ratio polyol:MDI=1:1.8; the amount of extender is such that the amount in moles of the polyol + extender is equal to that of the MDI.

They were made to react under action of 1000 rpm. The polymer was then spread on a Teflon surface and placed in oven at 80° -120°C for 5-15 hours.

The product was extruded (extrusion temperatures in the range 190-210°C) and spun in the form of monofilament.

The polymer obtained under these conditions, unlike the two previous ones, does not contain solvent and in this case it is referred to as fusion spinning.

### Example 3A

The procedure of example 3 was repeated except that a dispersion of hydrotalcite having the same formula as example 1A, was added at a concentration of 3% with respect to the dry polymer and with a grain size of 0.55 micron D 90.

Chlorine Test on the thread:
Concentration free chlorine: 3.5 ppm
PH: 7.5
Temperature: 30°C
Thread tension during the test: 150%
Efficiency %: is the product of the breaking strength and the lengthening at break.

The efficiency of a sample which has not been subjected to treatment is assumed to be 100%.

After the chlorine treatment the residual efficiency value with respect to the initial value is reported.

### Conclusions:

Examination of Table 1, which reports the result of the tests, shows there is an obvious need for an additive to resolve the problems of stability of the elastic threads in the presence of chlorine. In fact, in examples 1, 2, and 3, where an antichlorine additive has not been used, it was not possible to subject the sample treated with dissolved chlorine to mechanical tests. The infuence of the hydrotalcite concentration in the polyurethane compound on the mechanical property of the fiber is marginal, as can be seen from tests 1E1 and 1E3 , However, the influence of hydrotalcite grain-size on the spinning characteristics is remarkable. In fact, when the particle size exceeds 1.00 micron (Test C) there is a remarkable increase in pressure at the spinner which becomes unsustainable when the average grain size of hydrotalcite reaches 2.65 micron (Test 1D).

## Claims

1. Compound containing polyurethane and hydrotalcite able to furnish elastic thread resistant to the action of chlorine, by means of dry or fused spinning or spinning from solution, **characterized by** the hydrotalcite added to the polyurethane having average grain size less than 1 micron and, preferably less than 0.8 micron.

2. Compound according to Claim 1, **characterized by** the hydrotalcite added to the polyurethane being comprised of particles at least 90% of which fall within ± 10% of the average particle size.

3. Compound according to Claim 1, **characterized by** the hydrotalcite added to the polyurethane being represented by the general formula
MgxAl2(OH)2x+6-2(z+y)(CO3)yOz.nH2O
where x ranges from 3.5 to 6; y ranges from 0.5 to 2 and z ranges from 0.1 to 1; n is 0 or a positive integer.

4. Compound according to Claim 2, **characterized by** the hydrotalcite used being represented by the formula:
Mg4,5Al2(OH)13(CO3)0,8O0,2.

5. Compound according to Claim 1 **characterized by** the hydrotalcite added to the polyurethane being replaced by a mixture of oxides of aluminum and of magnesium in a ratio similar to those derivable from the general formula of the hydrotalcite.

6. Compound according to any one of the previous Claims, **characterized by** the hydrotalcite being subjected to milling in the presence of a solvent, preferably the same solvent used for the preparation of the polyurethane.

7. Procedure for the preparation of elastic threads of polyurethane resistant to the action of chlorine in which a compound comprising polyurethane, hydrotalcite and other additives is subjected to spinning, in conditions substantially analogous to those used in the standard preparation of elastic thread, **characterized by** the average size of hydrotalcite particles being less than 1 micron.

8. Procedure according to Claim 6, **characterized by** the average size of hydrotalcite particles being less than 0.8 micron and at least 90% of said particles being within ± 10% of the average value.
